# EUROPEAN PATENT SPECIFICATION

(11) **EP 1 286 515 B1**
(45) Date of publication and mention of the grant of the patent: **13.04.2011**
(21) Application number: 02017616.0
(22) Date of filing: 05.08.2002
(51) Int. Cl.: H04L 29/06

(54) **Network system of distributing protected contents through secured carrier server**
Netzwerk zur Verteilung geschützter Inhalte durch einen gesicherten Übertragungsdienst
Réseau de distribution de contenue protégé par un serveur sécurisé

(30) Priority: 10.08.2001 JP 2001243694
(43) Date of publication of application: 26.02.2003
(73) Proprietor: YAMAHA CORPORATION, Hamamatsu-shi Shizuoka-ken (JP)
(72) Inventor: Tanaka, Takahiro c/o Yamaha Corporation, Hamamatsu-shi, Shizuoka-ken, 430-8650 (JP)
(74) Representative: Kehl, Günther

(56) References cited:
- WO-A-00/59225
- WO-A-00/60599
- WO-A-01/44965
- WO-A-01/61913

## Description

### BACKGROUND OF THE INVENTION

### Industrial Field of Utilization

The present invention relates generally to a network service system which provides, through a communication network, content while protecting its copyright and a content providing service apparatus and a relay service apparatus which are for use in this network service system.

### Prior Art

Conventionally, carriers of public mobile communication networks provide a main telephony service and additional services for connecting terminals such as telephones which subscribe these services to the Internet by use of relay servers of these carriers.
The relay server (or gateway server) of each carrier is connected toofficial servers (official sites) of contracted official content providers (or information providers) by leased lines. In response to the access by mobile phones, each content provider provides digital contents including music data such as ringing melodies and karaoke performance, image data such as standby images, game programs, and other multimedia contents.
These mobile phones, mobile communication network systems, and official content provider servers are operated in a secure environment with respect to content transfer operations by being isolated from the outside. The content downloaded to each mobile phone is stored in its protected storage area of which security is guaranteed.
Consequently, the copyright protection of content is extremely reliable because there is little possibility for content to be captured, changed, or copied in an unauthorized manner during loading. Further there is little possibility for downloaded content to be transferred to other mobile phones for example or copied to cable-connected personal computers.

In addition to the above-mentioned official content providers, unofficial or general content providers who are not under contract with carriers can also provide contents through their servers. In this case, the accessing mobile phones and personal computers cannot be identified. The users are identified only by making them enter their IDs and passwords. Without IDS, the providers do not know who retrieved what content and how use the.
It is also possible for a mobile phone user to access a content provider server by use of a personal computer, then download content for mobile phone to the personal computer, and attach the downloaded content to electronic mail to transfer it to his mobile phone. In this case, however, it is possible for the downloaded content to be copied in an unauthorized manner or transferred to other mobile phones.

Thus, the content providing services performed by the servers of general content providers may not always secure copyright protection, thereby hindering the development of the content providing services from general content providers to mobile phone users. This inevitably leads to comparatively high copyright fees.

WO 01/44965 A1 discloses a system and method for distributing content over a network, involving a clearinghouse node, several distribution nodes, a destination node and a portable device. A content agent which is issued by the clearinghouse node comprises a combination of a content and a program for distributing the content. The distribution node executes the content agent, thereby directing the content agent to a final destination node in accordance with the terms and conditions built in the content agent.

The system of WO 01/44965 A1 is focussed on enabling two businesses to discover, negotiate with and facilitate an arrangement with each other, preferably without requiring human intervention. The content agent actively moves through the network end reaches the destination node as determined by the terms and conditions programmed in the content agent. The distribution nodes execute the content agent for directing the content agent to unidentified end users. Nevertheless, the distribution nodes are not arranged for responding to a request from an identified user.

### SUMMARY OF THE INVENTION

It is therefore an object of the present invention to provide a network service system which allows a content providing service apparatus to provide content in a secure manner by considering its copyright protection, involving a relay service apparatus, a content providing service program, and a relay service program.

In carrying out the invention and according to one aspect thereof, there is provided a system of a communication network service according to claim 1.

Consequently, because of the secure copyright protection, content provision is promoted. The user of each mobile terminal may be distribution service with various pieces of content from not only existing official content providers but also non-official content providers.

Preferably in the inventive system, the content providing service apparatus further comprises a content accepting section that accepts a piece of content created by a content creator, and that operates if the accepted piece of content requires copyright protection for attaching the copyright protection specification information to the accepted piece of content and storing the accepted piece of content together with the attached copyright protection specification information into the storage section.

Consequently, the uploading of content created by general content creators into the storage unit allows general users to acquire the content, thereby significantly expanding a chance of content acquisition. This configuration also allows mobile terminal users to acquire content created by them in the same manner.

The content that requires copyright protection is also stored in consideration of its copyright.

Preferably in the inventive system, the transfer request accepting section of the content providing service apparatus accepts the terminal identification information of the terminal apparatus of the user, the content transfer section of the content providing service apparatus transfers the terminal identification information of the terminal apparatus of the user along with the particular piece of content to the relay service apparatus, the content holding section of the relay service apparatus operates when the terminal identification information of the terminal apparatus of the user has been transferred along with the particular piece of content for holding the particular piece of content in the storage area allocated in correspondence with the terminal identification information of the terminal apparatus of the user, and the content delivery section of the relay service apparatus operates upon acceptance of the delivery request for the particular piece of content from the user through the terminal apparatus for retrieving the particular piece of content from the storage area corresponding to the terminal identification information of the terminal apparatus of the user.

Consequently, the storage area of the relay service apparatus is readily allocated for holding a particular piece of content, and retrieval of this content upon a delivery request may be specified with ease and in a secure manner.

Preferably in the inventive system, the content holding section of the relay service apparatus comprises a deleting section operative if the copyright protection specification information is attached to the particular piece of content which is a music piece reproducible on the terminal apparatus for deleting the particular piece of content from the storage area of the relay service apparatus after the content delivery section transmits the particular piece of content to the terminal apparatus, and the content storing section of the terminal apparatus operates if the copyright protection specification information is attached to the particular piece of content for deleting the particular piece of content after reproduction of the music piece by a predetermined number of times.

Consequently, a download format by which content is distributed to the storage area of each terminal apparatus substantially remains the same as a streaming reproduction format, thereby enhancing copyright protection.

Preferably in the inventive system, the content providing service apparatus comprises a direct delivery request accepting section operative for accepting a direct delivery request for the particular piece of content from the user through a given communication apparatus only if the copyright protection specification information is not attached to the particular piece of content, and a content direct delivery section that retrieves the particular piece of content for which the direct delivery request has been accepted from the storage section and delivers the particular piece of content to the given communication apparatus of the user.
Consequently, content for which copyright royalty need not be paid may be acquired directly from the content providing service apparatus without selecting a communication tool However, content for which copyright royalty need be paid can be delivered only from the relay service apparatus, so that its copyright protection is taken into account.

In carrying out the invention and according to another aspect thereof, there is provided a content providing service apparatus for performing a communication network service in combination with a plurality of terminal apparatuses subscribing content of the communication network service and a relay service apparatus for temporarily holding a particular piece of content in a storage area and retrieving the particular piece of content from the storage area to transmit the particular piece of content to one of the plurality of terminal apparatuses. The content providing service apparatus comprises a storage section that is provided for storing a plurality of pieces of content, each of which is attached with copyright protection specification information if the piece of content requires copyright protection, a transfer request accepting section that is provided for accepting a transfer request from a user for the particular piece of content selected from among the plurality of pieces of content stored in the storage section, and a content transfer section that is provided for transferring the particular piece of content for which the transfer request has been accepted to a content holding section allocated to each terminal apparatus in the storage area of the relay service apparatus so as to temporarily hold the particular piece of content therein before delivery of the particular piece of content to the terminal apparatus of the user. The content transfer section of the content providing service has a copyright processing section operative if the copyright apparatus protection specification information is attached to the particular piece of content for processing copyright royalty payment when transferring the particular piece of content.

Consequently, the execution of copyright processing by the content providing service apparatus only requires each user to issue transfer and delivery requests, thereby making it unnecessary for each user to perform content copyright processing on his own.

It should be noted that copyright processing may be executed by the relay service apparatus; in this case, in order to execute copyright processing, it is necessary to transfer copyright management information other than copyright protection specification information and a copyright management work code from the content providing service apparatus.

Consequently, the above-mentioned configuration realizes a content providing service apparatus for use in the inventive network service system.

In carrying out the invention and according to still another aspect thereof, there is provided a relay service apparatus having a storage area and relaying a communication network service in combination with a plurality of terminal apparatuses subscribing content of the communication network service with unique terminal identification information allocated to the respective terminal apparatuses and a content providing service apparatus for accepting a transfer request from a user for a particular piece of content selected from among a plurality pieces of content each of which is attached with copyright protection specification information if the piece of content requires copyright protection. The relay service apparatus comprises a content holding section operative when the particular piece of content is transferred from the content providing service apparatus for receiving and holding the particular piece of content in the storage area, a delivery request accepting section that is provided for accepting a delivery request for the particular piece of content from the user through the terminal apparatus, and a content delivery section that is provided for retrieving the particular piece of content requested a delivery from the storage area of the relay service apparatus and for delivering the retrieved particular piece of content to the terminal apparatus of the user through the communication network service.
Consequently, the above-mentioned configuration realizes a relay service apparatus for use in the inventive network service system.

In carrying out the invention and according to yet another aspect thereof, there is provided a content providing service program executable by a computer of a content providing service apparatus for performing a communication network service in combination with a plurality of terminal apparatuses subscribing content of the communication network service with unique terminal identification information allocated to the respective terminal apparatuses and a relay service apparatus for retrieving a particular piece of content from a storage area and transmitting the particular piece of content to one of the plurality of terminal apparatuses. The content providing service program comprises the steps of accepting a transfer request from the user for the particular piece of content selected from among the plurality of pieces of content stored in a storage, each piece of content being attached with copyright protection specification information if the piece of content requires copyright protection, and transferring the particular piece of content for which the transfer request has been accepted to a content holding section allocated to each terminal apparatus in a storage area of the relay service apparatus so as to temporarily hold the particular piece of content therein before delivery of the particular piece of content to the terminal apparatus of the user.

Consequently, by causing a computer to execute the above-mentioned content providing service program, the inventive content providing service apparatus is realized.

In carrying out the invention and according to a different aspect thereof, there is provided a content delivery program according to claim 9.

Consequently, by causing a computer to execute the above-mentioned relay service program, the relay service apparatus is realized.

### BRIEF DESCRIPTION OF THE DRAWINGS

FIG.1 is a schematic diagram illustrating an overall configuration of a network service system according to the invention.
FIG. 2 is a sequence diagram illustrating the processing of content providing services by use of the network service system according to the invention.
FIG. 3 is a block diagram illustrating an exemplary hardware configuration of a general content provider.
FIG. 4 is a diagram illustrating storage contents of a hard disk storage unit shown in FIG. 3.
FIG. 5 is a block diagram illustrating an exemplary hardware configuration of a mobile phone.
FIG. 6 is a diagram illustrating content stored in the RAM shown in FIG. 5.
FIG. 7 is flowchart describing a procedure of uploading content to the general content provider server.
FIG. 8 is a flowchart describing a procedure of making a request from a mobile phone user to the general content provider for the transfer of music data.
FIG. 9 is a flowchart describing a procedure of delivering music data from the carrier server to a mobile phone.
FIG. 10 is a flowchart describing a procedure for a mobile phone user to use the downloaded content.

### DETAILED DESCRIPTION OF THE INVENTION

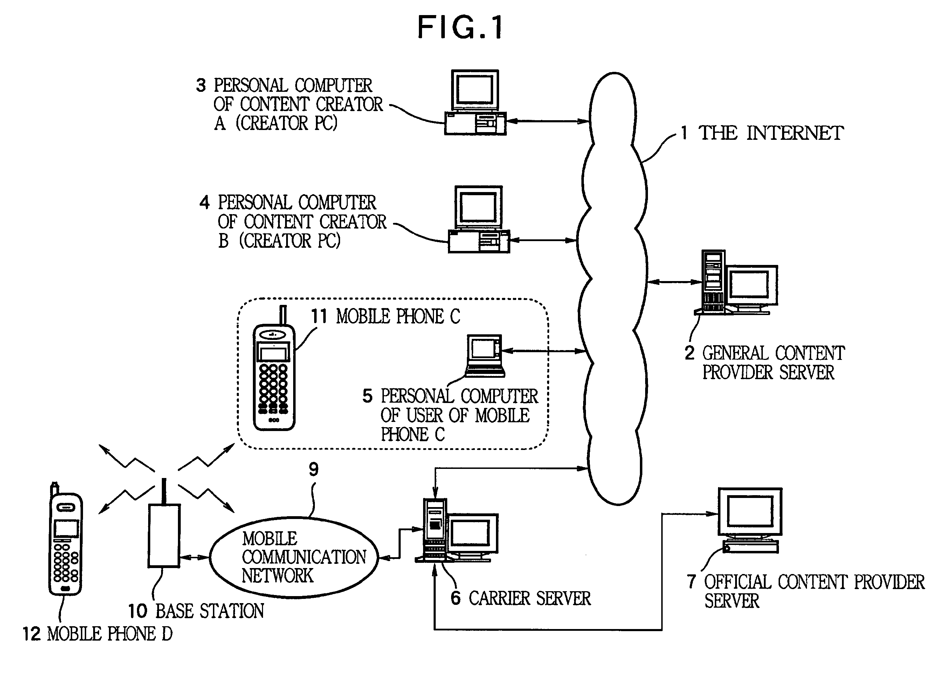

Referring to FIG. 1, there is shown a schematic diagram illustrating an overall configuration of a network service system according to the present invention.
In the figure, reference numeral 1 denotes the Internet. Reference numeral 2 denotes a server of a general content provider, reference numeral 3 denotes a personal computer A of a content creator A (a creator PC), reference numeral 4 denotes a personal computer of a content creator B (a creator PC), reference numeral 5 denotes a personal computer of a user of a mobile phone C, and a reference numeral 6 denotes a server of a carrier, those of which are interconnected by the Internet 1. Reference numeral 7 is a server of an official content provider, which is connected by a leased line to the carrier server 6.
Reference numeral 9 denotes a mobile communication network and reference numeral 10 denotes a base station. The carrier server 6 is connected to the mobile communication network 9. Reference numeral 11 denotes a mobile phone C and reference numeral 12 denotes a mobile phone D, both being the subscribers to a system having the mobile communication network 9.
It should be noted that the mobile phone C may connect to the general content provider server 2 through the mobile communication network 9 and the carrier server 6 to the services. However, for the brevity of description, it is assumed here that the owner of the mobile phone C connect from the personal computer 5 to the general content provider server 2.

In the above-mentioned configuration, the carrier server 6 conventionally executes communication protocol conversion capabilities between the leased line or the Internet 1 and the mobile communication network 9 and, at the same time, executes the management of mobile phone users, an electronic mail capability, the management of official content providers, and the processing of mediating fee-charging on the usage of content provided by the official content provider server 7.
For the fee-charging, in the case of measured rate, every time each mobile phone uses content, the number of times content has been used is counted and the carrier later bills the user of each mobile phone for the information fee.

If the general content provider server 2 provides services through the Internet 1 with clients such as the personal computer 5, the mobile phone C and so on, no content providing services that are secure in terms of copyright protection cannot be performed as described above.
However, because the route from the carrier server 6 up to the mobile phone C goes through the mobile communication network 9, the security is provided. At the mobile phone C, the downloaded content may be stored in a copyright-protected storage area.
The general content provider server 2 is connected to the carrier server 6 on a so-called B to B (Business to Business) basis, so that the security in communication route is inherently strong even with Internet connection. The security may be easily enhanced by separate use of SSL (Secure Sockets Layer) or other encrypted communication protocols.

Therefore, in the network service system according to the invention, the carrier server 6 is arranged with a secured storage area allocated to each mobile phone in correspondence with the terminal identification information such as mobile phone number. Because the storage area is arranged on the carrier server 6 and dedicated to each mobile phone, this storage area provides a protection storage area which is secure in terms of copyright protection.
The general content provider server 2 treats regards this protected storage area as if equivalent to a personal storage area of the personal computer 5 of the user requesting the delivery of particular content, and the server 2 transfers the requested content to the personal computer. At the same time, for the content which is attached with copyright protection specification information and which requires the payment for copyright royalty, the processing of copyright payment is performed at the transfer from the general content provider server 2 or at the delivery from the carrier server 6.
The user of the mobile phone C accesses the carrier server 6 to download the content requested for delivery from its allocated storage area.

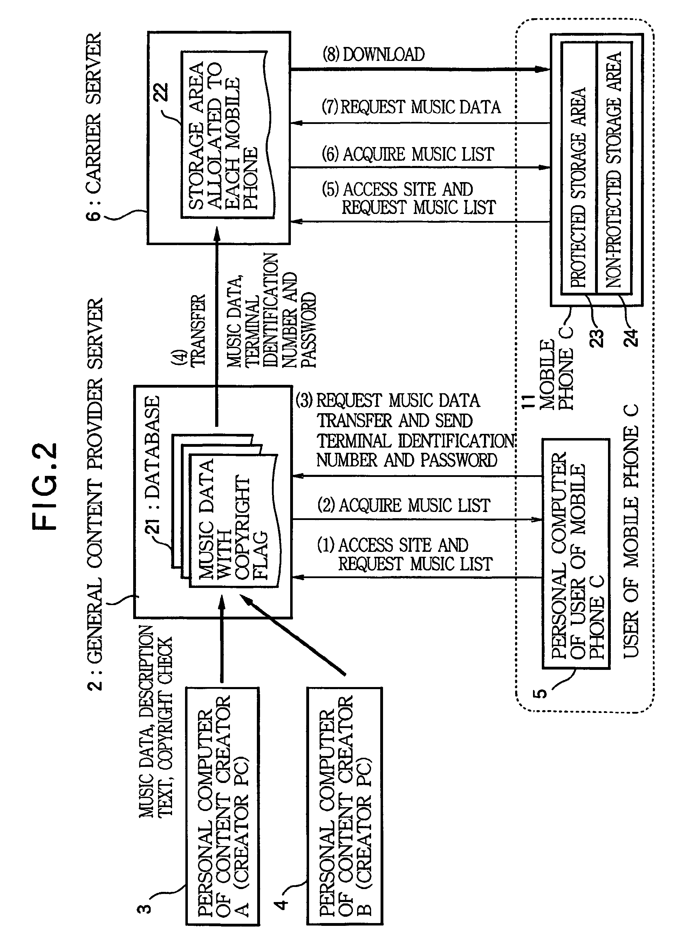

Referring to FIG. 2, there is shown a sequence diagram illustrating the processing of performing the inventive content providing services by use of the network service system according to the invention.
With reference to FIG. 2, components similar to those previously described with reference to FIG. 1 are denoted by the same reference numerals. In the general content provider server 2, reference numeral 21 denotes a database. In the carrier server 6, reference numeral 22 denotes a storage area allocated to each mobile phone. With the mobile phone C, reference numeral 23 denotes a protected storage area and reference numeral 24 denotes a non-protected storage area. Content stored in the non-protected storage area can be attached to an electronic mail for transfer to other mobile phones, or transferred for copying, to this mobile phone via a cable or infrared communication.
Content creators A and B upload created content (in what follows, this content is assumed to be music data of music play) to the general content provider server 2, which stores the received music data into the database 21.

Content creators A and B upload the created content in agreement with the terms of work registration. The work registration terms allow, if the music data represent an original piece created by one of these creators, its use free of charge by reserving its copyright. With music data created by other creators, there is not copyright problem if their copyright has expired. With those music data of which copyright is still valid, only those music data managed by JASRAC (Japanese Society for Rights of Authors, Composers and Publishers) may be used without charge. For both original music data and commercially available music data, the work registration terms allow use without charge by reserving the copyright and neighboring rights of the creators.
As for the uploading of music data, "original title," "artist," and "JASRAC work code" are registered in the case of commercially available music data of which copyright is still valid.

If the copyright of other parties is still valid, the copyright continues to exist and copyright protection specification information is attached to the uploaded music data (content) to be stored into the database 21. To be more specific, copyright flag CRF is set to "1" to indicate existence of copyright protection specification information.
Alternatively, an electronic watermark technology may be used to imbed copyright control information into content and this copyright control information may provide copyright protection specification information. If the expiration of copyright is written to item "category," it indicates that the content has no copyright protection specification information.
In addition or alternatively, the administrator of each general content provider may examine whether the uploaded music data are copyrighted, namely the uploaded music data have valid copyright not reserved for the original music and then officially register the uploaded music data into the database 21.
(1) The personal computer 5 of the user of the mobile phone C accesses the general content provider server 2 to request the transmission of a music list (content list).
(2) The general content provider server 2 transmits the requested music list, which the personal computer 5 receives.
(3) Checking the received music list, the user of the mobile phone C specifies particular music data and requests the general content provider server 2 to transfer the specified music data to the carrier server 6. At this moment, the user notifies the general content provider server 2 of the telephone number of the mobile phone C and the password.
(4) The general content provider server 2 retrieves the specified particular music data from the database 21 and transfers the retrieved music data to the carrier server 6 along with the notified telephone number and password.
   At this moment, if copyright protection specification information is attached to the specified particular music data, the general content provider server 2 performs the processing for copyright payment. To be more specific, the general content provider server 2 performs the processing necessary for the payment of copyright royalty to the copyright control organization by counting the number of times that the specified particular music data have been transferred for example.
   In the carrier server 6, the particular music data are stored in the storage area 22 dedicated to each mobile phone in accordance with the transferred telephone number and password.
(5) By use of the mobile phone C, its user accesses the carrier server 6 to request for the delivery of a music list. The storage area dedicated to each mobile phone may store a plurality of music pieces. If the storage area 22 dedicated to each mobile phone are adapted to store only one piece of music data, no music list is required in particular.
(6) The carrier server 6 transmits the requested music list from the storage area 22 dedicated to each mobile phone corresponding to the telephone number of the mobile phone C and the mobile phone C receives this music list.
(7) The user of the mobile phone C requests the carrier server 6 for the specified music data.
(8) The carrier server 6 downloads the requested music specified this time from the storage area 22 dedicated to each mobile phone corresponding to the telephone number of the mobile phone C into the protected storage area 23 or the non-protected storage area 24 of the mobile phone C. If copyright protection specification information (CRF=1) is attached to the specified and downloaded music data, the music data is downloaded in the protected storage area 23; otherwise (CRF=0), the music data is downloaded in the non-protected storage area 24. It will be apparent that the music data may be downloaded in the protected storage area 23 regardless of the attachment of copyright protection specification information.

As described above, content attached with the copyright protection specification information is transferred from the general content provider server 2 to the storage area 22 dedicated to each mobile phone of the carrier server 6, and then downloaded from the storage area 22 dedicated to each mobile phone into the protected storage area 23 of the mobile phone C. Therefore, there is no risk for content to be captured and copied halfway in or subsequent to its downloading, thereby providing communication and storage environments which are secure in copyright protection even for the services provided by general content providers.
On the other hand, only with content attached with no copyright protection specification information, the general content provider server 2 may retrieve content from the database 21 upon request from the personal computer 5 or the mobile phone C for direct delivery, thereby delivering the retrieved content to the personal computer 5 used by the user of the mobile phone C or to the mobile phone C itself.

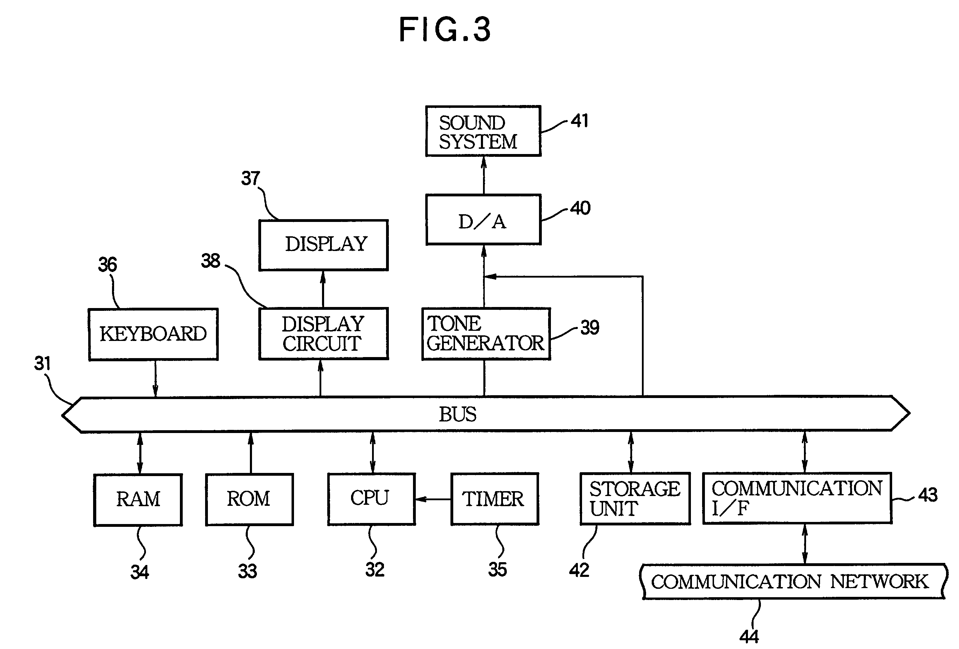

The following describes hardware configurations of the general content provider server 2 and the mobile phones C11 and D12 with reference to FIGS. 3 through 6.
Referring to FIG. 3, there is shown a block diagram illustrating an exemplary hardware configuration of the general content provider server 2.
In the figure, reference numeral 31 denotes a bus, reference numeral 32 denotes a CPU (Central Processing Unit), reference numeral 33 denote a ROM (Read Only Memory), and reference numeral 34 denotes a RAM (Random Access Memory). Reference numeral 35 denotes a timer for counting an interrupt time in program timer interrupt handling and various other times and clocks.
Reference numeral 36 denotes an operator input section based on keyboard and mouse for example, reference numeral 37 denotes a display, and reference numeral denotes a display circuit.

Reference numeral 39 denotes a tone generator, reference numeral 40 denotes a D/A (Digital to Analog) converter, and reference numeral 41 denotes a sound system based on an amplifier and a loudspeaker for example. When reproducing MIDI (Musical Instrument Digital Interface) play data such as SMF (Standard MIDI File), the tone generator 39 is used. On the other hand, when reproducing audio encoded music data based on MP3 (MPEG-1 Audio Layer-III), WMA (Windows Media Audio), and Twin VQ (Transform-domain weighted interleave Vector Quantization) for example, the music data are decoded by the CPU 32 in software approach and the decoded music data are directly outputted to the D/A converter 40. It should be noted that the decoding may alternatively be performed by use of a hardware decoder.
Reference numeral 42 denotes an external storage unit, a hard disk drive (HDD), a flexible disk drive (FDD), a CD-ROM drive, a magneto-optical (MO) drive, or a digital versatile disk (DVD) drive for example The hard disk drive stores an operating system program and a content providing service program and, at the same time, provides a content database.
Reference numeral 43 denotes a communication interface which is connected to the personal computer 5 of the user of the mobile phone C and the carrier server 6 on the Internet 1 shown in FIG. 1 via a communication network 44 such as leased line or an ISDN (Integrated Services Digital Network).

The ROM 33 stores a BIOS (Basic Input/Output System) program and an operating system boot program. The CPU 32 loads the operating system program from the hard disk drive (HDD) of the external storage unit into he RAM 44 to perform usual general input/output control operations.
The CPU 32 also loads the content providing service program from the hard disk drive into the RAM 34 to realize database management capability, content delivery request receiving capability, copyright processing capability, and content transfer capability for example.

The above-mentioned content providing service program and content may be stored in removable recording media such as CD-ROM, which is loaded in the external storage unit 42 to install these program and content on the hard disk drive, which is the recording medium of the external storage unit 42.
Also, the above-mentioned programs and content may be downloaded from a server on the Internet into the hard disk drive.
If the system lacks the tone generator 39, the CPU 32 can realize the tone generator functionality by executing a software tone generator program under the control of the operating system.

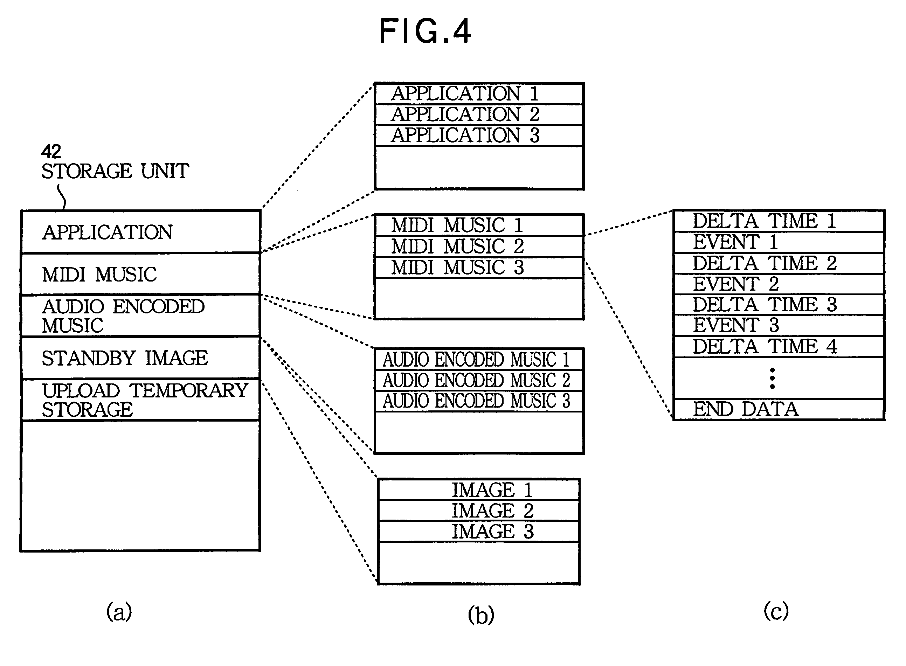

Referring to FIG. 4, there is shown a diagram illustrating the storage contents of the database stored in the hard disk drive of the general content provider server 2 shown in FIG. 3.
The hard disk drive has storage areas for storing the operation program, application programs, registers as well as Java (trademark) application programs (hereafter referred to simply as applications), MIDI music, audio encoded music, and standby images, as a database as shown in FIG. 4(a). The MIDI music data include compact MIDI for ringing melodies in addition to SMF.
The hard disk drive also has an upload area. The music data uploaded by a content creator are once stored in this upload storage area. If the uploaded music data are found still having copyright not reserved, these music data are duly transferred to the MIDI music storage area to be stored in the database.
As shown in FIG. 4(b), the application, MIDI music, and standby image storage areas each stores a plurality of content pieces. The content in each storage area is managed by a database management software program.
As shown in FIG. 4(c), one piece of MIDI music data describes MIDI events such as note-on and note-off and their timings by a set of delta time and event data.

The hardware configurations of a personal computer 3 of content creator A, a personal computer 4 of creator B, and the personal computer 5 of the mobile phone C are not shown in particular. These computers may be any personal computers that have an audio signal reproduction and music reproduction capabilities.
The hardware configuration of the carrier server 6 is the same as that of a general server in principle but larger in scale because the number of subscribing mobile phones is huge and the gateway capability processing must be executed.
Arrangement of the storage area 22 dedicated to each mobile phone in the carrier server 6 as one of the services to be provided by the server itself can realize a relay service apparatus to use in the network service system according to the invention.
It should be noted that if the data are transmitted by use of a PDC (Personal Digital Cellular) mobile packet communication network system as the mobile communication network 9, the carrier server 6 is connected to the M-PGW (Message-Packet Gateway Module) of the mobile communication network side.

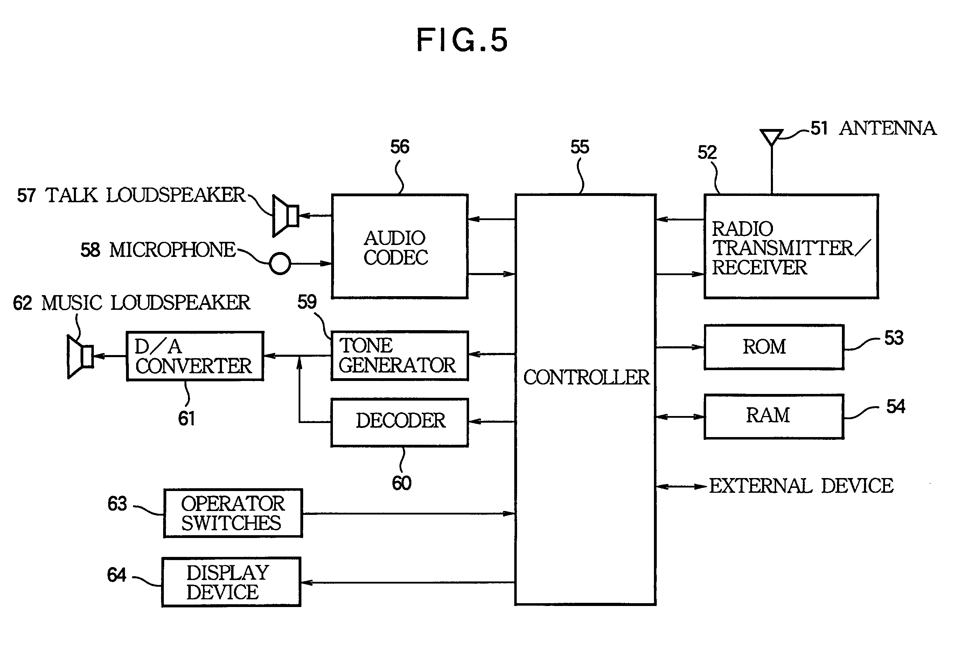

Referring to FIG. 5, there is shown a block diagram illustrating an exemplary hardware configuration of a mobile phone.
In the figure, reference numeral 51 denotes an antenna and reference numeral 52 denote a radio transmitter/receiver. The radio transmitter/receiver 52 has a modulator, a transmission power amplifier as the transmitting system, a high-frequency amplifier, an intermediate frequency amplifier, and a demodulator as the receiving system, and a frequency synthesizer common to both the transmitting and receiving systems.
Reference numeral 53 denotes a ROM, reference numeral 54 denotes a RAM, and reference numeral 55 denotes a controller.
The controller 55 includes a TDMA (Time Division Multiple Access) processor, a CPU, a timer, a display controller, an operator input section, and an external interface. Further, the controller 55 may be installed on a single-chip integrated circuit along with an audio CODEC for example to be described later.

The TDMA processor forms a time division frame of transmission data as the transmitting system and performs frame synchronization to output received data as the receiving system. The ROM 53 stores the operating system, native software, JAM (Java Application Manager), and so on of the mobile phone.
The CPU executes the realtime operating system and native software stored in the ROM to execute telephone communication, web browsing, and electronic mail capabilities. The CPU executes each application program as a virtual machine (K virtual machine). The RAM is used as a work memory and stores various registers, flags, application programs, and a scratch pad.

Reference numeral 56 denotes the audio CODEC (Coder/Decoder), reference numeral 57 denotes a loudspeaker for talking, and reference numeral 58 denotes a microphone. The audio CODEC 56 encodes talk voice inputted from the microphone 58 on the basis of VSELP (Vector Sum Exited Linear Prediction) for example and decodes received talk voice data to output the decoded data to the talk loudspeaker 57.
Reference numeral 59 denotes a tone generator, reference numeral 60 denotes a decoder, reference numeral 61 denotes a D/A converter, and reference numeral 62 denotes music speaker. If received music data are MIDI data, the tone generator 59 generates a musical tone signal and outputs it to the D/A converter 61, the converted signal being sounded from the music loudspeaker 62. From this loudspeaker, a ringing tone (or a ringing melody) and musical tones of karaoke or games are sounded. On the other hand, if received music data are audio encoded data such as MP3 for example, these data are decoded by the decoder 60, the decoded data are outputted to the D/A converter 61, and the converted data are sounded from the music loudspeaker 62. Reference numeral 64 denotes a display device based on a liquid crystal display (LCD) for example.

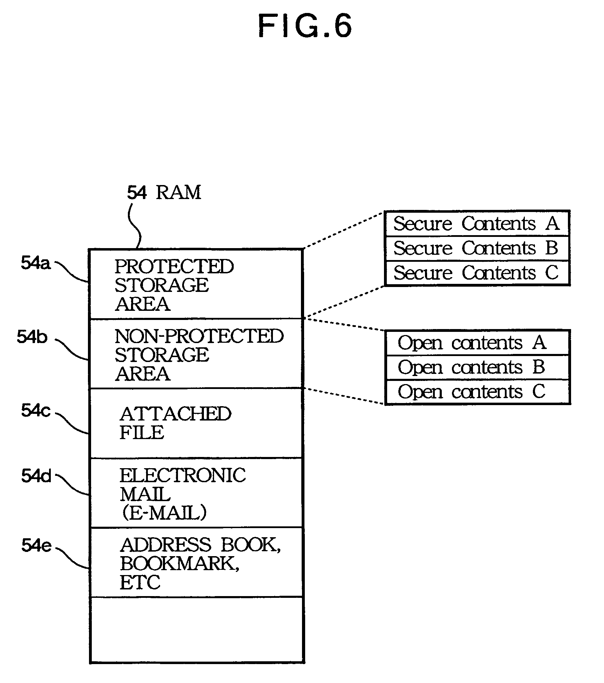

Referring to FIG. 6, there is shown a diagram illustrating content stored in parts of the RAM 54 shown in FIG. 5.
A protected storage area (secure download area) 54a is equivalent to the protected storage area 23 shown in FIG. 2 and stores content such as ringing melody, standby image, and Java application for example which is secure content attached with copyright protection specification information (CRF=1).
A non-protected storage area (open download area) 54b is equivalent to the non-protected storage area shown in FIG. 2 and stores content such as ringing melody, standby image, and application for example which is open content attached with no copyright protection specification information (CRF=0) because there is no need for protection.
An attached file area 54c stores a file (binary data converted into text data by BASE64 protocol) attached to electronic mail.
In addition, the RAM 54 has an electronic mail area 54d for storing the body of electronic mail and an address book and book mark, etc. area 54e.

Storing downloaded content for provision into the protected storage area 54a or the non-protected storage area 54b is determined by checking for the presence or absence of copyright protection specification information; namely, by use of the value of copyright flag CRF. If copyright flag is "1" (CRF=1), the content is stored in the protected storage area (secure download area) 54a; if copyright flag is "0" (CRF=0), the content is stored in the non-protected storage area 54b.
The content received as attached to electronic mail and stored in the attached file area 54c is also stored in the protected storage area 54a or the non-protected storage area 54b depending on whether, after decoding, the state copyright flag (CRF=1 or CRF-0).
It is practicable to encode, by BASE64, content such as music data stored in the non-protected storage area 54b, attach the encoded music data to electronic mail, and transfer the attached music data to the mobile phones of other users. On the contrary, content stored in the protected storage area 54a cannot be attached to electronic mail for transfer .
Also, by use of the external interface, the content stored in the non-protected storage area 54b is arranged not to be transferred to external personal computers.

Thus, the content stored in the protected storage area 54a is arranged not to be captured outside, so that copyrighted content is protected secure.
Because the storage capacity of the protected storage area 54a is predetermined, if downloaded new content makes the storage area overflow, the new content is stored in preference over old content, which is sequentially deleted from the storage area.
Due to the above-mentioned situations, the copyright royalty of music data, if they are stored in the protected storage area 54a, is set lower than they are stored in the non-protected storage area 54b.

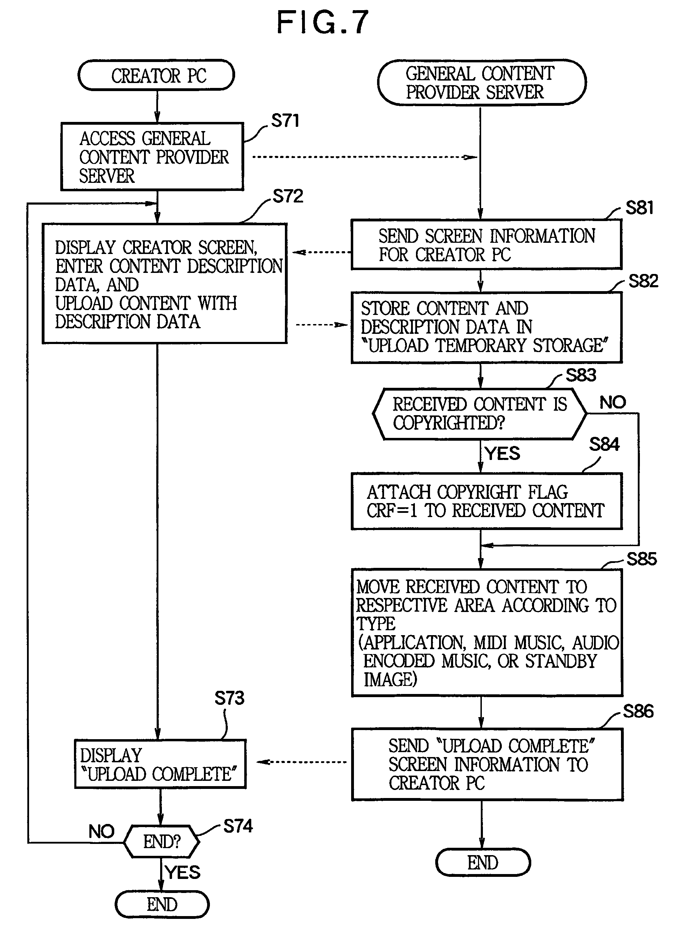

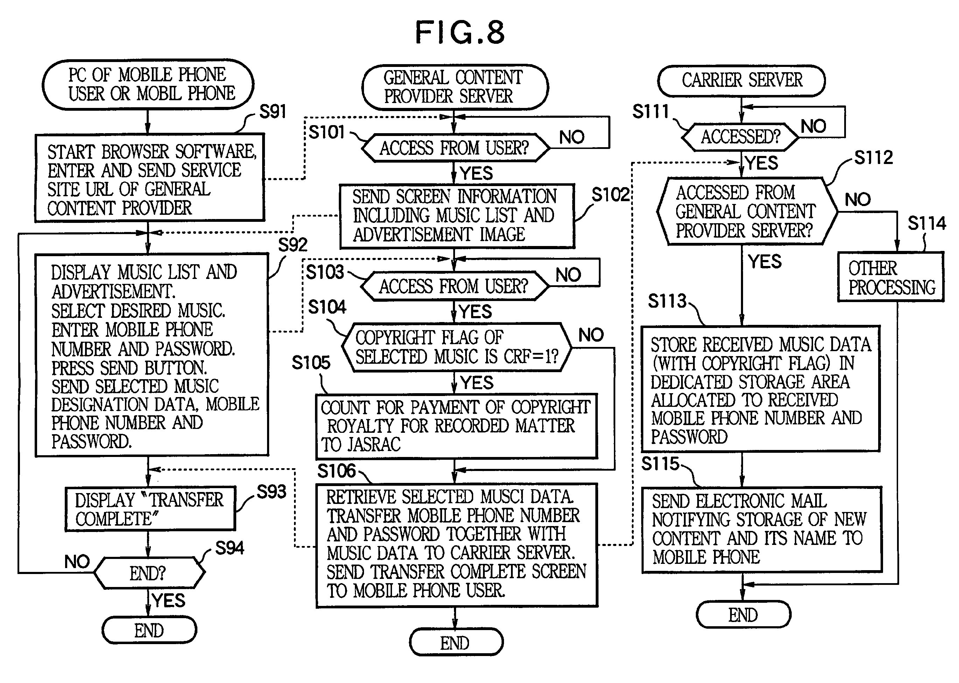

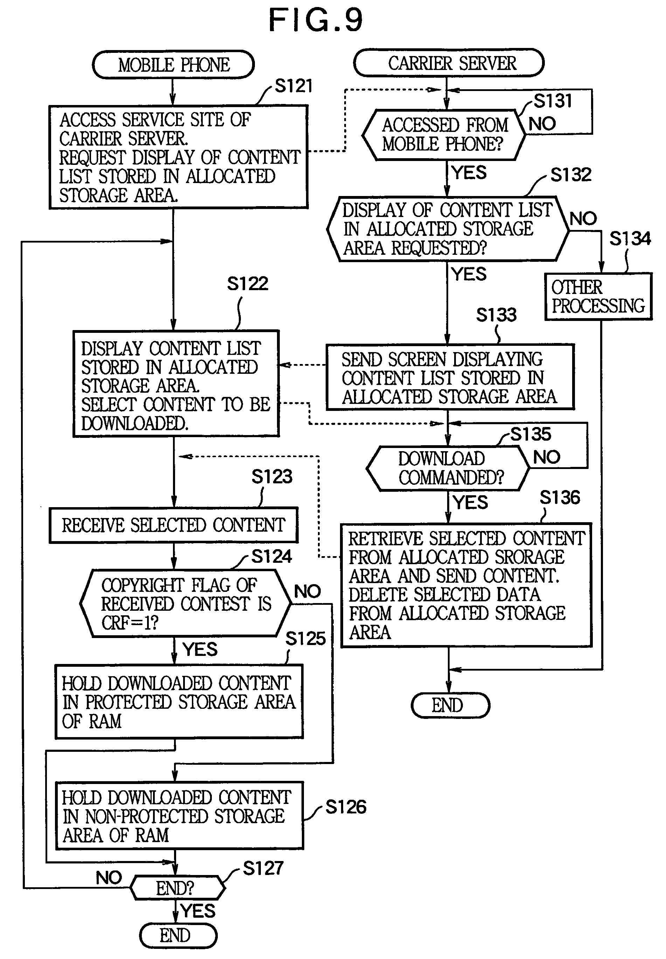

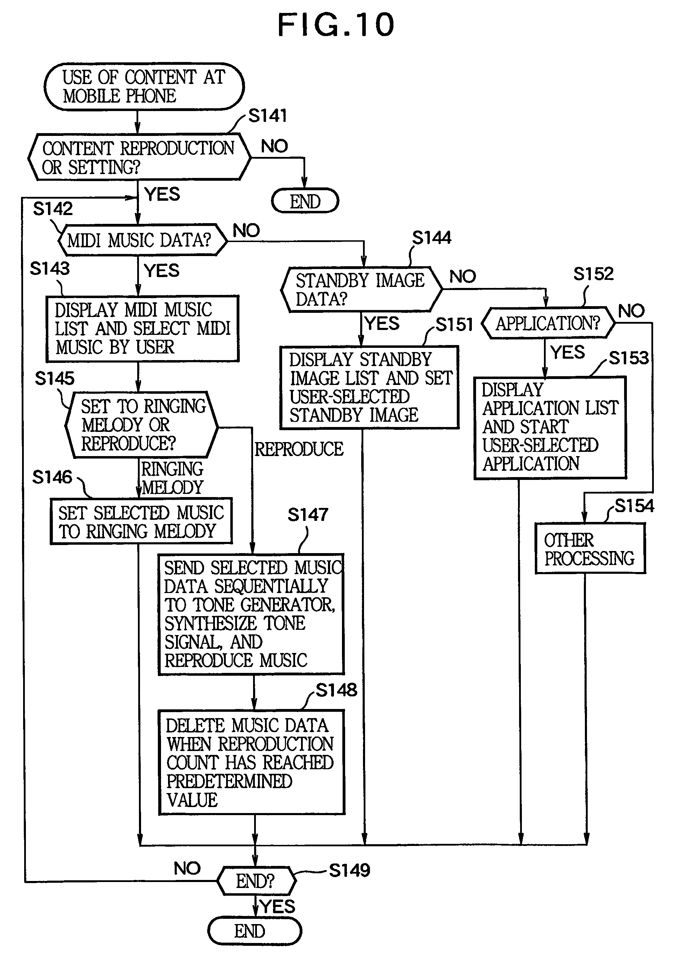

FIGS. 7 through 10 are flowcharts describing the processing procedures of the network service system according to the invention.
Referring to FIG. 7, there is shown the flowchart describing the procedure of uploading content to a general content provider server.
Referring to FIG. 8, there is shown the flowchart describing the procedure of requesting by a mobile phone user to the general content provider server for music data.
Referring to FIG. 9, there is shown the flowchart describing the procedure of delivering music data from a carrier server to a mobile phone.
Referring to FIG. 10, there is shown the flowchart describing the procedure of using content downloaded by the user of a mobile phone.

Now, referring to FIG. 7, the procedure of a content upload program will be described.
In S71 of FIG. 7, the creator PC (the personal computer of content creator A) 3 accesses the general content provider server 2. In S81, the general content provider server 2 sends the image information for the creator. In S72, the creator PC 3 displays the creator image information to cause the creator to enter the description data of the content to be provided. The general content provider server 2 retrieves the requested content from its hard disk for example and uploads the retrieved content with content description data. Along with music data, the image data for use in standby screen can be provided.
Although the description is skipped, if content is an application, it can be uploaded to be stored in the database 21.
In S82, the general content provider server 2 stores the content and its description data into "upload temporary storage" area (refer to FIG. 4). In S83, it is determined whether the received content is copyrighted or, more strictly, the received content has valid copyright not reserved.

The determination of the presence of the copyright of music data is performed in a variety of manners.
First, method 1 will be described. In S72 for content registration, the creator enters "JASRAC work code" in addition to "original title name" and "artist." When "JASRAC work code" has been entered, it is determined that the copyright of the music data exists.
Alternatively, "JASRAC work search database" is automatically accessed to reference the entered "original title name" and "artist," thereby determining whether or not the copyright exists. If the copyright is found, this copyright is protected.

In method 2, the administrator of the general content provider server 2 is made check the music data stored in "upload temporary storage" area and enter the decision to determined whether or not the copyright exists.
Various other methods are possible and two or more methods may be combined for determination.
In the case of a standby screen or an application, the determination is made by the self statement by the creator that the music data are his original and the checking by the administrator of the general content provider server 2.

If the received content is found having copyright in S83, then the procedure goes to S84; otherwise, the procedure goes to S85. In S84, copyright flag CRF=1 is attached to the received content and the procedure goes to S85. It should be noted that the initial value of copyright flag CRF is "0".
In S85, the received content is stored in one of the storage areas depending on its type, namely application, MIDI music data, audio encoded music data, or standby image data and then stored in the database 21.
In S86, "upload complete" screen information is sent to the creator PC 3. In S73 of the creator PC 3, "upload complete" is displayed. In S74, if the creator PC 3 specifies the end of the upload program, the program is ended; otherwise, the procedure returns to S72.
It should be noted that "upload complete" may be mailed to the creator after the end of the upload program.

The following describes, with reference to FIG. 8, the procedure of a program for requesting by the mobile phone user to the general content provider server 2 for transferring music data.
It is assumed that the general content provider be registered beforehand with the carrier as a business entity which transfers content to the storage area 2 dedicated to each mobile terminal.
In S91, the PC 5 of the user of the mobile phone C or the mobile phone C 11 starts the browser software, enters the URL (Uniform Resource Locator) of the general content provider server 2, and sends it.
In S101, the general content provider server 2 determines whether or not it has been accessed from the user of the mobile phone C. If the access is found, the procedure goes to S102; otherwise, the procedure returns to S101 to wait for access. In S102, the general content provider server 2 sends image information including a music list and an advertisement image.
In S92, the PC 5 of the user of the mobile phone C or the mobile phone C 11 displays the music list and the advertisement to let the user to select desired music from the music list.
The user also enters terminal identification information such as the mobile telephone number. If password entry must be performed by the user for the transfer to the storage area 22 dedicated to each mobile phone, the user enters the password.
When the user presses the send button, the data indicative of the selected music data are sent along with the entered mobile phone number and password.

It is assumed that there be only one carrier which performs additional services by arranging the storage area 22 dedicated to each mobile phone to the server and the user of the mobile phone C subscribe the mobile communication network of the carrier, and subscribe the additional services for using the storage area 22 dedicated to each mobile phone.
If there is not the above-mentioned assumption, then, in S102, the screen information for letting the user specify the subscribed mobile communication network and the subscription to the additional services. In S92, the user of the mobile phone C enters these information.

In S103, the general content provider server 2 determines whether it has been accessed from the user of the mobile phone C. If the access is found, then the procedure goes to S104; otherwise, the procedure returns to S103 to wait for ccess.
In S104, the general content provider server 2 determines whether the copyright flag for selected music is "1" (CRF=1). If the copyright flag is "1," then the procedure goes to S105; if the copyright flag is "0," then the procedure goes to S106.
In S105, the number of times transfer has been made is incremented for the payment of the copyright royalty associated with recorded matter.
In S106, the general content provider server 2 retrieves the selected music data from the database 21 and sends the music data to the carrier server 6 along with the mobile telephone number and password and, if any, standby image data. At the same time, the general content provider server 2 sends a screen indicative of the end of the transfer to the PC 5 of he user of the mobile phone C or the mobile phone C 11.
In response, "transfer complete" is displayed on the PC 5 of the user of the mobile phone C or the mobile phone C in S93. In S94, the general content provider server 2 lets the user of the mobile phone C determines whether or not to end the content providing service request program. If the user determines to end this program, this program is ended; otherwise, the procedure returns to S92.

On the other hand, in S111, the carrier server 6 determines whether it has been accessed by any URL. If the access is found, then the procedure goes to S112; otherwise, the procedure returns to S111 to wait for access.
In S112, carrier server 6 determines whether the access is from the general content provider server 2. If the decision is yes, the procedure goes to S113; otherwise, the procedure goes to S114.
In S113, the carrier server 6 stores the music data (attached with copyright flag CRF) in the storage area 22 dedicated to each mobile phone corresponding to the received mobile phone number and password.
In S115, the carrier server 6 sends to the mobile phone C 11 an electronic mail message telling that the new content has been stored, along with its name.
On the other hand, if the access is not from the general content provider server 2, then, in S114, the carrier server 6 performs other processing for the source of the access.

Because the above-mentioned services are of a system in which each general content provider gets advertisement revenue by displaying advertisements and pays copyright royalties, the user of the mobile phone C need not pay them. Alternatively, if the user of the mobile phone C is charged for the reason of insufficient advertisement revenue for example, then an arrangement may be made to let the user enter his credit card number or prepaid card number in S92. In this case, the carrier server 6 may mediate the information fee-charge processing.

The following describes the procedure of a program for delivering music data to the mobile phone C 11 with reference to FIG. 9.
In S121 of the mobile phone, the mobile phone accesses the URL of a service site of the carrier server 6. The mobile phone requests the service site for a content list stored in the storage area dedicated to this mobile phone C 11 in the storage area 22 dedicated to each mobile phone.
In S131, the carrier server determines whether it has been access by any mobile phone. If the access is found, the procedure goes to S132; otherwise, the procedure returns to S131 to wait for access. In S132, the carrier server determines whether the accessing mobile phone C 11 has requested the display of the content list stored in the storage area dedicated to the mobile phone C 1. If the request is found, the procedure goes to S133; otherwise, the procedure goes to S134.
In S133, the carrier server sends a content list display screen in the allocated storage area to the accessing mobile phone C and the procedure goes to S135. On the other hand, in S134, the carrier server performs other processing corresponding to other requests.

In S122, the mobile phone C 11 displays the content list display screen in the storage area dedicated to this mobile phone C 11. The user selects desired content from the displayed list and sends a command to the carrier server 6 for downloading.
In S135, the carrier server 6 determines whether the download command has come. If the download command is found, the procedure goes to S136; otherwise, the procedure returns to S135 to wait for the command.
In S136, the carrier server retrieves the selected content form the storage area dedicated to this mobile phone C and sends the retrieved content thereto. Then, the carrier server deletes the transmitted content from the storage area dedicated to this mobile phone C, thereby disabling reloading.

Alternatively, the content stored in the storage area dedicated to this mobile phone C may be automatically deleted a certain time after the transfer, one week for example, or after checking that the downloading has been made to the mobile phone C up to the specified number of times.
In S123, the mobile phone C 11 receives the selected content. In S124, the mobile phone determines whether the copyright flag of the received content is "1" (CRF=1). If the decision is yes, the procedure goes to S125; otherwise, the procedure goes to S126.
In S125, the mobile phone stores the downloaded content into the protected storage area (secure download area) 54a of the RAM 54. In S126, the downloaded content is stored in the non-protected storage area (open download area) 54b of the RAM. In either case, the mobile phone lets the user enter or not the end of the delivery request processing in S127. If the delivery request processing is to be ended, this program is ended; otherwise, the processing returns to S122.

The following describes the procedure of a program for using content downloaded by the user of each mobile phone with reference to FIG. 10.
This processing program may be adapted to automatically start when the user opens an electronic mail message telling new content from the carrier server 6.
In S141, the mobile phone determines whether content is to be reproduced or set. If the decision is yes, the procedure goes to S142; otherwise, the processing comes to an end.
In S142, the mobile phone determines whether the content to be reproduced or set is MIDI music data. If the decision is yes, the procedure goes to S143; otherwise, the procedure goes to S144.
In S143, a list of MIDI music stored in the mobile phone C 11 is displayed to let to user of the mobile phone C select desired music and, at the same time, select the setting of the MIDI music data to a ringing melody or the reproduction of the MIDI music data.

In S145, if the MIDI music data are set to a ringing melody, the procedure goes to S146; if they are reproduced, the procedure goes to S147.
In S146, the selected music data are set to a ringing melody and the procedure goes to step S149. In S147, the selected music data are sequentially sent in the order of retrieval to the tone generator 59 to synthesize a tone signal for reproduction.
In S148, when the reproduction count has reached the predetermined value, the music data are deleted and the procedure goes to S149. It should be noted that, since the copyright flag is CRF=1, only the content stored in the protected storage area 23 shown in FIG. 2 (54a shown in FIG. 6) may be deleted. To do so, the mobile phone C 11 uses a reproduction count specification flag and, when this flag becomes "0" after decrementing the reproduction count every time the music data are reproduced, deletes the music data. An arrangement may be made in which this predetermined value n is transferred to the carrier server 6 along with the content from the general content provider server 2, subsequently transmitting the predetermined value n along with the content from the carrier server 6 to the mobile phone C 11.

In S142, if the content is not music data, then the mobile phone determines in S144 whether the content is standby image data. If the decision is yes, the processing goes to S151; otherwise, the processing goes to S152.
In S151, a list of the stored standby images is displayed. The user selects a desired standby image from the list and sets the selected standby image, upon which the procedure goes to S149.
If the content to be set is not a standby image, then the mobile phone determines in S152 whether the content is an application program. If the decision is yes, the procedure goes to S153; otherwise, the procedure goes to S154.
In S153, a list of application programs is displayed. The mobile phone starts an application program selected by the user. When the execution of the selected application program comes to an end, the procedure goes to S149.
In S154, the processing corresponding to other content is executed.
In S149, the user determines whether to end the content usage program. If the content usage program is not to be ended, the procedure returns to S142.

In the flowchart shown in FIG. 10, the case in which the content is audio encoded music data is not shown. If the content is audio encoded music data, the same processing as that for MIDI music data may be performed. However, in S147, the audio encoded music data are supplied to the decoder before being reproduced.
In the above-mentioned examples, the general content provider performs the copyright processing in accordance with the number of times content has been transferred and the mobile phone user can reproduce content the predetermined number of times for every transfer.
Alternatively, the number of times content has been downloaded from he storage area 22 dedicated to each mobile phone of the carrier server to each mobile phone may be counted to perform the copyright processing at the carrier server 6.

In the above-mentioned examples, the original music of each content creator is provided free of copyright charge. The copyright and neighboring rights of each content creator are also provided free of charge. Alternatively, the copyright and the copyright and neighboring rights may be provided for pay. If the payment is required, copyright protection specification information may be attached to content.
For the copyright protection when content is an application program or a standby screen image, a copyright management institution may be established or each content provider may manage copyright, thereby realizing the same protection as that of music copyright and the payment of copyright royalties.
In the above-mentioned examples, the mobile communication network to which mobile phones subscribes has been described. With stationary telephones subscribing a telecommunication network system connected to a telephone office in a wired manner, the same network services may be realized if a carrier installs a server having a gateway capability of connection to the Internet.
In addition to mobile phones and station phones, any data terminals may be used and such data terminals need not have a talking capability if they subscribe the communication network system of a carrier and are registered at the gateway sever of this carrier.
In the above-mentioned examples, the general content provider server 2 is connected to he carrier server 6 through the Internet 1 for use by general public. However, this does not necessarily exclude the use of leased lines. When leased lines are used, a content storage area dedicated to each mobile phone may be arranged on the carrier server 6 to execute content providing services, thereby making functional distribution, unlike the relationship between the official content provider server 7 and the carrier server 6.

As described and according to the invention, the content providing service functionality is divided between a content providing service apparatus mainly performing the database functionality such as content upload and selection and a relay service apparatus for actually delivering content to terminal devices, so that the content providing service apparatus can provide content in a secure manner with copyright protection taken into consideration.
Consequently, the risk is minimized for any content subject to copyright protection to be captured halfway in its transfer or copied in an unauthorized manner. In addition, for example, the transfer by the content relay service apparatus may be regarded as equivalent to the delivery to the mobile phone of each user to perform copyright processing, thereby enhancing the efficiency of copyright protection.

## Claims

1. A system of a communication network service comprising a content providing service apparatus (2), a relay service apparatus (6), and a plurality of terminal apparatuses (11) each being allocated with unique terminal identification information and each subscribing said communication network service,
said content providing service apparatus (2) comprising:
a storage section (21, 42) that is provided for storing a plurality of pieces of content, each piece of content being attached with copyright protection specification information if said piece of content requires copyright protection;
a transfer request accepting section that is provided for accepting a transfer request from a user for a particular piece of content selected from among said plurality of pieces of content stored in said storage section (21, 42); and
a content transfer section that is provided for transferring said particular piece of content for which said transfer request has been accepted to said relay service apparatus (6) and that comprises a copyright processing section operative if said copyright protection specification information is attached to said particular piece of content for processing copyright royalty payment when transferring said particular piece of content;
said relay service apparatus (6) comprising:
a content holding section (22) that has a storage area (22) allocated to each terminal apparatus (11) and operates when said particular piece of content is transferred from said content providing service apparatus (2) for temporarily holding said particular piece of content in said storage area (22);
a delivery request accepting section that is provided for accepting a delivery request for said particular piece of content from said user through said terminal apparatus (11); and
a content delivery section that is provided for retrieving said particular piece of content requested for delivery from said allocated storage area (22) and for delivering said retrieved particular piece of content to said terminal apparatus (11) of said user through said communication network service; and
said terminal apparatus (11) of said user comprising:
a content storing section (23, 24, 54) that is provided for storing said delivered particular piece of content.

2. The system according to claim 1, wherein said content providing service apparatus (2) further comprises a content accepting section that accepts a piece of content created by a content creator (3, 4), and that operates if said accepted piece of content requires copyright protection for attaching said copyright protection specification information to said accepted piece of content and storing said accepted piece of content together with said attached copyright protection specification information into said storage section (21, 42).

3. The system according to claim 1, wherein said transfer request accepting section of said content providing service apparatus (2) accepts said terminal identification information of said terminal apparatus (11) of said user;
said content transfer section of said content providing service apparatus (2) transfers said terminal identification information of said terminal apparatus (11) of said user along with said particular piece of content to said relay service apparatus (6);
said content holding section (22) of said relay service apparatus operates when said terminal identification information of said terminal apparatus (11) of said user has been transferred along with said particular piece of content for holding said particular piece of content in said storage area (22) allocated in correspondence with said terminal identification information of said terminal apparatus (11) of said user; and
said content delivery section (22) of said relay service apparatus (6) operates upon acceptance of said delivery request for said particular piece of content from said user through said terminal apparatus (11) for retrieving said particular piece of content from said storage area (22) corresponding to said terminal identification information of said terminal apparatus (11) of said user.

4. The system according to claim 1, wherein said content holding section (22) of said relay service apparatus comprises a deleting section operative if said copyright protection specification information is attached to said particular piece of content which is a music piece reproducible on said terminal apparatus (11) for deleting said particular piece of content from said storage area (22) of said relay service apparatus after said content delivery section transmits said particular piece of content to said terminal apparatus (11); and
said content storing section (23, 24, 54) of said terminal apparatus (11) operates if said copyright protection specification information is attached to said particular piece of content for deleting said particular piece of content after reproduction of the music piece by a predetermined number of times.

5. The system according to claim 1, wherein said content providing service apparatus (2) comprises a direct delivery request accepting section operative for accepting a direct delivery request for said particular piece of content from said user through a given communication apparatus (5, 11) only if said copyright protection specification information is not attached to said particular piece of content; and
a content direct delivery section that retrieves said particular piece of content for which said direct delivery request has been accepted from said storage section (21, 42) and delivers said particular piece of content to said given communication apparatus (5, 11) of said user.

6. A content providing service apparatus (2) for performing a communication network service in combination with a plurality of terminal apparatuses (11) subscribing content of said communication network service and a relay service apparatus (6) for temporarily holding a particular piece of content in a storage area (22) and retrieving said particular piece of content from said storage area to transmit said particular piece of content to one of said plurality of terminal apparatuses (11), said content providing service apparatus (2) comprising:
a storage section (21, 42) that is provided for storing a plurality of pieces of content, each of which is attached with copyright protection specification information if said piece of content requires copyright protection;
a transfer request accepting section that is provided for accepting a transfer request from a user for said particular piece of content selected from among said plurality of pieces of content stored in said storage section (21, 42); and
a content transfer section that is provided for transferring said particular piece of content for which said transfer request has been accepted to a content holding section (22) allocated to each terminal apparatus (11) in said storage area (22) of said relay service apparatus (6) so as to temporarily hold said particular piece of content therein before delivery of said particular piece of content to said terminal apparatus (11) of said user, and that comprises a copyright processing section operative if said copyright protection specification information is attached to said particular piece of content for processing copyright royalty payment when transferring said particular piece of content.

7. A relay service apparatus (6) having a storage area (22) and relaying a communication network service in combination with a plurality of terminal apparatuses (11) subscribing content of said communication network service with unique terminal identification information allocated to the respective terminal apparatuses and a content providing service apparatus for accepting a transfer request from a user for a particular piece of content selected from among a plurality pieces of content each of which is attached with copyright protection specification information if said piece of content requires copyright protection, said relay service apparatus (6) comprising:
a content holding section (22) allocated to each terminal apparatus (11) and operative when said particular piece of content is transferred from said content providing service apparatus (2) for receiving and holding said particular piece of content in said storage area (22);
a delivery request accepting section that is provided for accepting a delivery request for said particular piece of content from said user through said terminal apparatus (11); and
a content delivery section that is provided for retrieving said particular piece of content requested a delivery from said allocated storage area (22) of said relay service apparatus (6) and for delivering said retrieved particular piece of content to said terminal apparatus (11) of said user through said communication network service.

8. A content providing service program executable by a computer of a content providing service apparatus (2) for performing a communication network service in combination with a plurality of terminal apparatuses (11) subscribing content of said communication network service with unique terminal identification information allocated to said respective terminal apparatuses (11) and a relay service apparatus (6) for retrieving a particular piece of content from a storage area (22) and transmitting said particular piece of content to one of said plurality of terminal apparatuses (11), said content providing service program comprising the steps of:
accepting a transfer request (S 103) from said user for said particular piece of content selected from among said plurality of pieces of content stored in a storage section (21, 42), each piece of content being attached with copyright protection specification information if said piece of content requires copyright protection,
transferring (S106) said particular piece of content for which said transfer request has been accepted to a content holding section (22) allocated to each terminal apparatus (11) in a storage area (22) of said relay service apparatus (6) so as to temporarily hold said particular piece of content therein before delivery of said particular piece of content to said terminal apparatus (11) of said user; and
processing (S105), if said copyright protection specification information is attached to said particular piece, copyright royalty payment when transferring said particular piece of content.

9. A content delivery program executable by a computer of a relay service apparatus (6) which is used in combination with a plurality of terminal apparatuses (11) subscribing content of a communication network service with unique terminal identification information allocated to said respective terminal apparatuses (11) and a content providing service apparatus (2) for providing said communication network service and for accepting a transfer request of a particular piece of content from a user selected from among a plurality pieces of content each of which is stored together with copyright protection specification information if said piece of content requires copyright protection, said content delivery program comprising the steps of:
holding (S113) said particular piece of content in a storage area (22) allocated to the terminal apparatus (11) of said user when said particular piece of content is transferred from said content providing service apparatus (2);
accepting a delivery request (S135) for said particular piece of content from said user through said terminal apparatus (11); and
retrieving (S136) said particular piece of content requested for delivery from said allocated storage area (22) of said relay service apparatus (6) and delivering (S136) said retrieved particular piece of content to said terminal apparatus (11) of said user through said communication network service.

10. A method of performing a communication network service in a content providing service apparatus (2) in combination with a plurality of terminal apparatuses (11) subscribing content of said communication network service with unique terminal identification information allocated to said respective terminal apparatuses (11) and a relay service apparatus (6) for buffering a particular piece of content in a storage area (22) and transmitting said particular piece of content to one of said plurality of terminal apparatuses (11), said method comprising the steps of:
accepting a transfer request (S103) from a user for said particular piece of content selected from among said plurality of pieces of content stored in a storage section (21, 42), each piece of content being attached with copyright protection specification information if said piece of content requires copyright protection,
transferring (S106) said particular piece of content for which said transfer request has been accepted to a content holding section (22) allocated to each terminal apparatus (11) in said storage area (22) of said relay service apparatus (6) so as to temporarily hold said particular piece of content therein before delivery of said particular piece of content to said terminal apparatus (11) of said user; and
processing (S105), if said copyright protection specification information is attached to said particular piece, copyright royalty payment when transferring said particular piece of content.

11. A method performed in a relay service apparatus (6) which is used in combination with a plurality of terminal apparatuses (11) subscribing content of a communication network service with unique terminal identification information allocated to said respective terminal apparatuses (11) and a content providing service apparatus (2) for providing said communication network service and for accepting a transfer request of a particular piece of content from a user selected from among a plurality pieces of content each of which is stored together with copyright protection specification information if said piece of content requires copyright protection, said method comprising the steps of:
holding (S 113) said particular piece of content in a storage area (22) allocated to the terminal apparatus (11) of said user when said particular piece of content is transferred from said content providing service apparatus (2);
accepting a delivery request (S135) for said particular piece of content from said user through said terminal apparatus (11); and
retrieving (S136) said particular piece of content requested for delivery from said allocated storage area (22) of said relay service apparatus and delivering (S136) said retrieved particular piece of content to said terminal apparatus (11) of said user through said communication network service.

## Patentansprüche

1. System eines Kommunikationsnetzdienstes, umfassend eine Inhalte-Bereitstellungs-Dienstvorrichtung (2), eine Weitervermittlungs-Dienstvorrichtung (6) sowie eine Vielzahl von Endgeräten (11), denen jeweils eindeutige Endgerät-Identifikationsinformationen zugewiesen sind und die jeweils den Kommunikationsnetzdienst abonnieren,
wobei die Inhalte-Bereitstellungs-Dienstvorrichtung (2) umfasst:
einen Speicherabschnitt (21, 42), der zum Speichern einer Vielzahl von Einzelinhalten vorgesehen ist, wobei an jeden Einzelinhalt Copyright-Schutz-Spezifizierungsinformationen angehängt sind, wenn der Einzelinhalt einen Copyright-Schutz benötigt;
einen Übertragungs-Anforderungs-Entgegennahme-Abschnitt, der dazu vorgesehen ist, von einem Benutzer eine Übertragungsanforderung für einen bestimmten Einzelinhalt entgegenzunehmen, der aus der Vielzahl von Einzelinhalten ausgewählt wurde, die in dem Speicherabschnitt (21,42) gespeichert sind; und
einen Inhalte-Übertragungsabschnitt, der zum Übertragen des bestimmten Einzelinhalts, für den die Übertragungsanforderung entgegengenommen wurde, an die Weitervermittlungs-Dienstvorrichtung (6) vorgesehen ist, und der einen Copyright-Verarbeitungsabschnitt beinhaltet, der tätig wird, wenn die Copyright-Schutz-Spezifizierungsinformationen an den bestimmten Einzelinhalt angehängt sind, um Copyright-Lizenzgebührenzahlungen zu verarbeiten, wenn der bestimmte Einzelinhalt übertragen wird;
wobei die Weitervermittlungs-Dienstvorrichtung (6) umfasst:
einen Inhalte-Zwischenspeicherungsabschnitt (22), in dem dem jeweiligen Endgerät (11) ein Speicherbereich (22) zugewiesen ist, und der tätig wird, wenn der bestimmte Einzelinhalt von der Inhalte-Bereitstellungs-Dienstvorrichtung (2) übertragen wird, um den bestimmten Einzelinhalt vorübergehend in dem Speicherbereich (22) zwischenzuspeichern;
einen Lieferungsanforderungs-Entgegennahme-Abschnitt, der dazu vorgesehen ist, eine von dem Benutzer über das Endgerät (11) für den bestimmten Einzelinhalt eingegebene Lieferungsanforderung entgegenzunehmen; und
einen Inhalte-Lieferungsabschnitt, der dazu vorgesehen ist, den zur Lieferung angeforderten bestimmten Einzelinhalt aus dem zugewiesenen Speicherbereich (22) abzurufen, um den abgerufenen bestimmten Einzelinhalt über den Kommunikationsnetzdienst an das Endgerät (11) des Benutzers zu liefern; und
wobei das Endgerät (11) des Benutzer umfasst:
einen Inhalte-Speicherabschnitt (23, 24, 54), der dazu vorgesehen ist, den gelieferten bestimmten Einzelinhalt zu speichern.

2. System nach Anspruch 1, wobei die Inhalte-Bereitstellungs-Dienstvorrichtung (2) ferner einen Inhalte-Entgegennahme-Abschnitt umfasst, der einen Einzelinhalt entgegennimmt, der von einem Inhalte-Erzeuger (3, 4) erzeugt wurde, und der tätig wird, wenn der entgegengenommene Einzelinhalt einen Copyright-Schutz benötigt, um die Copyright-Schutz-Spezifizierungsinformationen an den entgegengenommenen Einzelinhalt anzuhängen und um den entgegengenommenen Einzelinhalt zusammen mit den angehängten Copyright-Schutz-Spezifizierungsinformationen in dem Speicherabschnitt (21, 42) zu speichern.

3. System nach Anspruch 1, wobei der Übertragungsanforderungs-Entgegennahme-Abschnitt der Inhalte-Bereitstellungs-Dienstvorrichtung (2) die Endgerät-Identifizierungsinformationen des Endgeräts (11) des Benutzers entgegennimmt;
der Inhalte-Übertragungsabschnitt der Inhalte-Bereitstellungs-Dienstvorrichtung (2) die Endgerät-Identifizierungsinformationen des Endgeräts (11) des Benutzers zusammen mit dem bestimmten Einzelinhalt an die Weitervermittlungs-Dienstvorrichtung (6) überträgt;
der Inhalte-Zwischenspeicherungsabschnitt (22) der Weitervermittlungs-Dienstvorrichtung tätig wird, wenn die Endgerät-Identifizierungsinformationen des Endgeräts (11) des Benutzers zusammen mit dem bestimmten Einzelinhalt übertragen wurden, um den bestimmten Einzelinhalt in dem Speicherbereich (22) zwischenzuspeichern, der in Entsprechung zu den Endgerät-Identifizierungsinformationen des Endgeräts (11) des Benutzers zugewiesen wurde; und
der Inhalte-Lieferungsabschnitt (22) der Weitervermittlungs-Dienstvorrichtung (6) nach Entgegennahme der von dem Benutzer über das Endgerät (11) für den bestimmten Einzelinhalt eingegebenen Lieferungsanforderung tätig wird, um den bestimmten Einzelinhalt aus dem Speicherbereich (22) abzurufen, der den Endgerät-Identifizierungsinformationen des Endgeräts (11) des Benutzers entspricht.

4. System nach Anspruch 1, wobei der Inhalte-Zwischenspeicherungsabschnitt (22) der Weitervermittlungs-Dienstvorrichtung einen Löschungsabschnitt umfasst, der tätig wird, wenn die Copyright-Schutz-Spezifizierungsinformationen an den bestimmten Einzelinhalt anhängt sind, bei dem es sich um ein Musikstück handelt, das auf dem Endgerät (11) wiedergebbar ist, um den bestimmten Einzelinhalt aus dem Speicherbereich (22) der Weitervermittlungs-Dienstvorrichtung zu löschen, nachdem der Inhalte-Lieferungsabschnitt den bestimmten Einzelinhalt an das Endgerät (11) übertragen hat; und
der Inhalte-Speicherungsabschnitt (23, 24, 54) des Endgeräts (11) tätig wird, wenn die Copyright-Schutz-Spezifizierungsinformationen an den bestimmten Einzelinhalt angehängt sind, um den bestimmten Einzelinhalt zu löschen, nachdem das Musikstück eine vorbestimmte Anzahl von Malen wiedergegeben worden ist.

5. System nach Anspruch 1, wobei die Inhalte-Bereitstellungs-Dienstvorrichtung (2) einen Direktlieferungsanforderungs-Entgegennahme-Abschnitt umfasst, der tätig wird, um eine Direktlieferungsanforderung für den bestimmten Einzelinhalt von dem Benutzer über eine bestimmte Kommunikationsvorrichtung (5, 11) nur dann entgegenzunehmen, wenn die Copyright-Schutz-Spezifizierungsinformationen nicht an den bestimmten Einzelinhalt angehängt sind; und
einen Inhalte-Direktlieferungsabschnitt, der den bestimmten Einzelinhalt, für den die Direktlieferungsanforderung von dem Speicherabschnitt (21, 42) entgegengenommen wurde, abruft und den bestimmten Einzelinhalt an die bestimmte Kommunikationsvorrichtung (5, 11) des Benutzers liefert.

6. lnhalte-Bereitstellungs-Dienstvorrichtung (2) zum Durchführen eines Kommunikationsnetzdienstes in Kombination mit einer Vielzahl von Endgeräten (11), die Inhalte des Kommunikationsnetzdienstes abonnieren, und einer Weitervermittlungs-Dienstvorrichtung (6) zum vorübergehenden Zwischenspeichern eines bestimmten Einzelinhalts in einem Speicherbereich (22) und zum Abrufen des bestimmten Einzelinhalts von dem Speicherbereich zum Übertragen des bestimmten Einzelinhalts an eines der Vielzahl von Endgeräten (11), wobei die Inhalte-Bereitstellungs-Dienstvorrichtung (2) umfasst:
einen Speicherabschnitt (21, 42), der zum Speichern einer Vielzahl von Einzelinhalten vorgesehen ist, wobei an jeden Einzelinhalt Copyright-Schutz-Spezifizierungsinformationen angehängt sind, wenn der Einzelinhalt einen Copyright-Schutz benötigt;
einen Übertragungs-Anforderungs-Entgegennahme-Abschnitt, der dazu vorgesehen ist, von einem Benutzer eine Übertragungsanforderung für den bestimmten Einzelinhalt entgegenzunehmen, der aus der Vielzahl von Einzelinhalten ausgewählt wurde, die in dem Speicherabschnitt (21,42) gespeichert sind; und
einen Inhalte-Übertragungsabschnitt, der vorgesehen ist, um den bestimmten Einzelinhalt, für den die Übertragungsanforderung entgegengenommen wurde, an einen Inhalte-Zwischenspeicherungsabschnitt (22) zu übertragen, der dem jeweiligen Endgerät (11) in dem Speicherbereich (22) der Weitervermittlungs-Dienstvorrichtung (6) zugeweisen ist, um so den bestimmten Einzelinhalt vorübergehend in sich zwischenzuspeichern, bevor der bestimmte Einzelinhalt an das Endgerät (11) des Benutzers geliefert wird, und der einen Copyright-Verarbeitungsabschnitt beinhaltet, der tätig wird, wenn die Copyright-Schutz-Spezifizierungsinformationen an den bestimmten Einzelinhalt angehängt sind, um eine Copyright-Lizenzgebührenzahlung zu verarbeiten, wenn der bestimmte Einzelinhalt übertragen wird.

7. Weitervermittlungs-Dienstvorrichtung (6), die einen Speicherbereich (22) aufweist und einen Kommunikationsnetzwerkdienst weitervermittelt, in Kombination mit einer Vielzahl von Endgeräten (11), die Inhalte des Kommunikationsnetzdiensts abonnieren, wobei den jeweiligen Endgeräten eindeutige Endgerät-Identifikationsinformationen zugewiesen sind, und einer Inhalte-Bereitstellungs-Dienstvorrichtung zum Entgegennehmen einer von einem Benutzer eingegebenen Übertragungsanforderung für einen bestimmten Einzelinhalt, der aus einer Vielzahl von Einzelinhalten ausgewählt wurde, wobei an jeden davon Copyright-Schutz-Spezifizierungsinformationen angehängt sind, wenn der Einzelinhalt einen Copyright-Schutz benötigt, wobei die Weitervermittlungs-Dienstvorrichtung (6) umfasst:
einen Inhalte-Zwischenspeicherungsabschnitt (22), der dem jeweiligen Endgerät (11) zugewiesen ist und der tätig wird, wenn der bestimmte Einzelinhalt von der Inhalte-Bereitstellungs-Dienstvorrichtung (2) übertragen wird, um den bestimmten Einzelinhalt zu empfangen und vorübergehend in dem Speicherbereich (22) zwischenzuspeichern;
einen Lieferungsanforderungs-Entgegennahme-Abschnitt, der dazu vorgesehen ist, eine von dem Benutzer über das Endgerät (11) für den bestimmten Einzelinhalt eingegebene Lieferungsanforderung entgegenzunehmen; und
einen Inhalte-Lieferungsabschnitt, der dazu vorgesehen ist, den zur Lieferung angeforderten bestimmten Einzelinhalt aus dem zugewiesenen Speicherbereich (22) der Weitervermittlungs-Dienstvorrichtung (6) abzurufen und den abgerufenen bestimmten Einzelinhalt über den Kommunikationsnetzdienst an das Endgerät (11) des Benutzers zu liefern.

8. Inhalte-Bereitstellungs-Dienstprogramm, das von einem Computer einer Inhalte-Bereitstellungs-Dienstvorrichtung (2) zum Durchführen eines Kommunikationsnetzdienstes ausführbar ist, in Kombination mit einer Vielzahl von Endgeräten (11), die Inhalte des Kommunikationsnetzdiensts abonnieren, wobei den jeweiligen Endgeräten (11) eindeutige Endgerät-Identifikationsinformationen zugewiesen sind, und einer Weitervermittlungs-Dienstvorrichtung (6) zum Abrufen eines bestimmten Einzelinhalts von einem Speicherbereich (22) und zum Übertragen des bestimmten Einzelinhalts an eines der Vielzahl von Endgeräten (11), wobei das Inhalte-Bereitstellungs-Dienstprogramm die folgenden Schritte umfasst:
Entgegennehmen einer von dem Benutzer eingegebenen Übertragungsanforderung (S103) für den bestimmten Einzelinhalt, der aus der Vielzahl von Einzelinhalten ausgewählt wurde, die in dem Speicherabschnitt (21, 42) gespeichert sind, wobei an jeden Einzelinhalt Copyright-Schutz-Spezifizierungsinformationen angehängt sind, wenn der Einzelinhalt einen Copyright-Schutz benötigt,
Übertragen (S106) des bestimmten Einzelinhalts, für den die Übertragungsanforderung entgegengenommen wurde, an einen Inhalte-Zwischenspeicherungsabschnitt (22), der dem jeweiligen Endgerät (11) in einem Speicherbereich (22) der Weitervermittlungs-Dienstvorrichtung (6) zugewiesen ist, um so den bestimmten Einzelinhalt vorübergehend in sich zwischenzuspeichern, bevor der bestimmte Einzelinhalt an das Endgerät (11) des Benutzers geliefert wird; und
Verarbeiten (S105) einer Copyright-Lizenzgebührenzahlung, wenn die Copyright-Schutz-Spezifizierungsinformationen an den bestimmten Einzelinhalt angehängt sind, wenn der bestimmte Einzelinhalt übertragen wird.

9. Inhalte-Lieferungsprogramm, das vom Computer einer Weitervermittlungsvorrichtung (6) ausführbar ist, die in Kombination mit einer Vielzahl von Endgeräten (11) eingesetzt wird, die Inhalte eines Kommunikationsnetzdiensts abonnieren, wobei den jeweiligen Endgeräten (11) eindeutige Endgerät-Identifikationsinformationen zugewiesen sind, und einer Inhalte-Bereitstellungs-Dienstvorrichtung (2) zum Bereitstellen des Kommunikationsnetzdienstes und zum Entgegennehmen einer von einem Benutzer eingegebenen Übertragungsanforderung eines bestimmten Einzelinhalts, der aus einer Vielzahl von Einzelinhalten ausgewählt wurde, die jeweils zusammen mit Copyright-Schutz-Spezifizierungsinformationen gespeichert sind, wenn der Einzelinhalt einen Copyright-Schutz benötigt, wobei das Inhalte-Lieferungsprogramm die folgenden Schritte umfasst:
Zwischenspeichern (S113) des bestimmten Einzelinhalts in einem Speicherbereich (22), der dem Endgerät (11) des Benutzers zugewiesen ist, wenn der bestimmte Einzelinhalt von der Inhalte-Bereitstellungs-Dienstvorrichtung (2) übertragen wird;
Entgegennehmen einer von dem Benutzer über das Endgerät (11) für den bestimmten Einzelinhalt eingegebenen Lieferungsanforderung (S135); und
Abrufen (S136) des zur Lieferung angeforderten bestimmten Einzelinhalts aus dem zugewiesenen Speicherbereich (22) der Weitervermittlungs-Dienstvorrichtung (6) und Liefern (S136) des abgerufenen bestimmten Einzelinhalts an das Endgerät (11) des Benutzers über den Kommunikationsnetzdienst.

10. Verfahren zum Durchführen eines Kommunikationsnetzdienstes in einer Inhalte-Bereitstellungs-Dienstvorrichtung (2) in Kombination mit einer Vielzahl von Endgeräten (11), die Inhalte des Kommunikationsnetzdiensts abonnieren, wobei den jeweiligen Endgeräten (11) eindeutige Endgerät-Identifikationsinformationen zugewiesen sind, und einer Weitervermittlungs-Dienstvorrichtung (6) zum Puffern eines bestimmten Einzelinhalts in einem Speicherbereich (22) und Übertragen des bestimmten Einzelinhalts an eines der Vielzahl von Endgeräten (11), wobei das Verfahren die folgenden Schritte umfasst:
Entgegennehmen einer von einem Benutzer eingegebenen Übertragungsanforderung (S103) für den bestimmten Einzelinhalt, der aus der Vielzahl von Einzelinhalten ausgewählt wurde, die in dem Speicherabschnitt (21, 42) gespeichert sind, wobei an jeden Einzelinhalt Copyright-Schutz-Spezifizierungsinformationen angehängt sind, wenn der Einzelinhalt einen Copyright-Schutz benötigt,
Übertragen (S106) des bestimmten Einzelinhalts, für den die Übertragungsanforderung entgegengenommen wurde, an einen Inhalte-Zwischenspeicherungsabschnitt (22), der dem jeweiligen Endgerät (11) in dem Speicherbereich (22) der Weitervermittlungs-Dienstvorrichtung (6) zugewiesen ist, um so den bestimmten Einzelinhalt vorübergehend in sich zwischenzuspeichern, bevor der bestimmte Einzelinhalt an das Endgerät (11) des Benutzers geliefert wird; und
Verarbeiten (S105) einer Copyright-Lizenzgebührenzahlung, wenn die Copyright-Schutz-Spezifizierungsinformationen an den bestimmten Einzelinhalt angehängt sind, wenn der bestimmte Einzelinhalt übertragen wird.

11. Verfahren, das in einer Weitervermittlungsvorrichtung (6) durchgeführt wird, die in Kombination mit einer Vielzahl von Endgeräten (11) eingesetzt wird, die Inhalte des Kommunikationsnetzdiensts abonnieren, wobei den jeweiligen Endgeräten (11) eindeutige Endgerät-Identifikationsinformationen zugewiesen sind, und einer Inhalte-Bereitstellungs-Dienstvorrichtung (2) zum Bereitstellen des Kommunikationsnetzdienstes und zum Entgegennehmen einer von einem Benutzer eingegebenen Übertragungsanforderung eines bestimmten Einzelinhalts, der aus einer Vielzahl von Einzelinhalten ausgewählt wurde, die jeweils zusammen mit Copyright-Schutz-Spezifizierungsinformationen gespeichert sind, wenn der Einzelinhalt einen Copyright-Schutz benötigt, wobei das Verfahren die folgenden Schritte umfasst:
Zwischenspeichern (S113) des bestimmten Einzelinhalts in einem Speicherbereich (22), der dem Endgerät (11) des Benutzers zugeordnet ist, wenn der bestimmte Einzelinhalt von der Inhalte-Bereitstellungs-Dienstvorrichtung (2) übertragen wird;
Entgegennehmen einer von dem Benutzer über das Endgerät (11) für den bestimmten Einzelinhalt eingegebenen Lieferungsanforderung (S135); und
Abrufen (S136) des zur Lieferung angeforderten bestimmten Einzelinhalts aus dem zugewiesenen Speicherbereich (22) der Weitervermittlungs-Dienstvorrichtung und Liefern (S136) des abgerufenen bestimmten Einzelinhalts an das Endgerät (11) des Benutzers über den Kommunikationsnetzdienst.

## Revendications

1. Système d'un service de réseau de communication comprenant un appareil de service de fourniture de contenu (2), un appareil de service de relais (6), et une pluralité d'appareils terminaux (11), des informations d'identification de terminal uniques étant affectées à chacun d'entre eux et chacun étant abonné audit service de réseau de communication,
ledit appareil de service de fourniture de contenu (2) comprenant :
une section de stockage (21, 42) qui est prévue pour stocker une pluralité d'éléments de contenu, à chaque élément de contenu étant jointes des informations de spécification de protection de droits d'auteur si ledit élément de contenu requiert une protection de droits d'auteur ;
une section d'acceptation de demande de transfert qui est prévue pour accepter une demande de transfert par un utilisateur pour un élément de contenu particulier choisi dans ladite pluralité d'éléments de contenu stockée dans ladite section de stockage (21, 42) ; et
une section de transfert de contenu qui est prévue pour transférer ledit élément de contenu particulier pour lequel ladite demande de transfert a été acceptée audit appareil de service de relais (6) et qui comprend une section de traitement de droits d'auteur opérationnelle si lesdites informations de spécification de protection de droits d'auteur sont jointes audit élément de contenu particulier pour traiter un paiement de droits d'auteur lors du transfert dudit élément de contenu particulier ;
ledit appareil de service de relais (6) comprenant :
une section de retenue de contenu (22) qui comporte une zone de stockage (22) affectée à chaque appareil terminal (11) et fonctionne lorsque ledit élément de contenu particulier est transféré depuis ledit appareil de service de fourniture de contenu (2) pour retenir temporairement ledit élément de contenu particulier dans ladite zone de stockage (22) ;
une section d'acceptation de demande de livraison qui est prévue pour accepter une demande de livraison pour ledit élément de contenu particulier par ledit utilisateur par l'intermédiaire dudit appareil terminal (11) ; et
une section de livraison de contenu qui est prévue pour récupérer ledit élément de contenu particulier dont la livraison est demandée à partir de ladite zone de stockage (22) affectée et pour livrer ledit élément de contenu particulier récupéré audit appareil terminal (11) dudit utilisateur par l'intermédiaire dudit service de réseau de communication ; et
ledit appareil terminal (11) dudit utilisateur comprenant :
une section de stockage de contenu (23, 24, 54) qui est prévue pour stocker ledit élément de contenu particulier livré.

2. Système selon la revendication 1, dans lequel ledit appareil de service de fourniture de contenu (2) comprend en outre une section d'acceptation de contenu qui accepte un élément de contenu créé par un créateur de contenu (3, 4), et qui fonctionne si ledit élément de contenu accepté requiert une protection de droits d'auteur pour joindre lesdites informations de spécification de protection de droits d'auteur audit élément de contenu accepté et stocker ledit élément de contenu accepté conjointement avec lesdites informations de spécification de protection de droits d'auteur jointes dans ladite section de stockage (21, 42).

3. Système selon la revendication 1, dans lequel ladite section d'acceptation de demande de transfert dudit appareil de service de fourniture de contenu (2) accepte lesdites informations d'identification de terminal dudit appareil terminal (11) dudit utilisateur ;
ladite section de transfert de contenu dudit appareil de service de fourniture de contenu (2) transfère lesdites informations d'identification de terminal dudit appareil terminal (11) dudit utilisateur conjointement avec ledit élément de contenu particulier audit appareil de service de relais (6) ;
ladite section de retenue de contenu (22) dudit appareil de service de relais fonctionne lorsque lesdites informations d'identification de terminal dudit appareil terminal (11) dudit utilisateur ont été transférées conjointement avec ledit élément de contenu particulier pour retenir ledit élément de contenu particulier dans ladite zone de stockage (22) affectée en fonction desdites informations d'identification de terminal dudit appareil terminal (11) dudit utilisateur ; et
ladite section de livraison de contenu (22) dudit appareil de service de relais (6) fonctionne sur acceptation de ladite demande de livraison pour ledit élément de contenu particulier par ledit utilisateur par l'intermédiaire dudit appareil terminal (11) pour récupérer ledit élément de contenu particulier dans ladite zone de stockage (22) correspondant auxdites informations d'identification de terminal dudit appareil terminal (11) dudit utilisateur.

4. Système selon la revendication 1, dans lequel ladite section de retenue de contenu (22) dudit appareil de service de relais comprend une section de suppression opérationnelle si lesdites informations de spécification de protection de droits d'auteur sont jointes audit élément de contenu particulier qui est un élément de musique reproductible sur ledit appareil terminal (11) pour supprimer ledit élément de contenu particulier de ladite zone de stockage (22) dudit appareil de service de relais après que ladite section de livraison de contenu a transmis ledit élément de contenu particulier audit appareil terminal (11) ; et
ladite section de stockage de contenu (23, 24, 54) dudit appareil terminal (11) fonctionne si lesdites informations de spécification de protection de droits d'auteur sont jointes audit élément de contenu particulier pour supprimer ledit élément de contenu particulier après reproduction de l'élément de musique un nombre de fois prédéterminé.

5. Système selon la revendication 1, dans lequel ledit appareil de service de fourniture de contenu (2) comprend une section d'acceptation de demande de livraison directe opérationnelle pour accepter une demande de livraison directe pour ledit élément de contenu particulier par ledit utilisateur par l'intermédiaire d'un appareil de communication donné (5, 11) seulement si lesdites informations de spécification de protection de droits d'auteur ne sont pas jointes audit élément de contenu particulier ; et
une section de livraison directe de contenu qui récupère ledit élément de contenu particulier pour lequel ladite demande de livraison directe a été acceptée dans ladite section de stockage (21, 42) et livre ledit élément de contenu particulier audit appareil de communication donné (5, 11) dudit utilisateur.

6. Appareil de service de fourniture de contenu (2) permettant de réaliser un service de réseau de communication en combinaison avec une pluralité d'appareils terminaux (11) abonnés à un contenu dudit service de réseau de communication et un appareil de service de relais (6) permettant de retenir temporairement un élément de contenu particulier dans une zone de stockage (22) et de récupérer ledit élément de contenu particulier dans ladite zone de stockage pour transmettre ledit élément de contenu particulier à l'un de ladite pluralité d'appareils terminaux (11), ledit appareil de service de fourniture de contenu (2) comprenant:
une section de stockage (21, 42) qui est prévue pour stocker une pluralité d'éléments de contenu, des informations de spécification de protection de droits d'auteur étant jointes à chacun d'entre eux si ledit élément de contenu requiert une protection de droits d'auteur ;
une section d'acceptation de demande de transfert qui est prévue pour accepter une demande de transfert par un utilisateur pour ledit élément de contenu particulier choisi dans ladite pluralité d'éléments de contenu stockée dans ladite section de stockage (21, 42) ; et
une section de transfert de contenu qui est prévue pour transférer ledit élément de contenu particulier pour lequel ladite demande de transfert a été acceptée à une section de retenue de contenu (22) affectée à chaque appareil terminal (11) dans ladite zone de stockage (22) dudit appareil de service de relais (6) de façon à retenir temporairement ledit élément de contenu particulier à l'intérieur avant livraison dudit élément de contenu particulier audit appareil terminal (11) dudit utilisateur, et qui comprend une section de traitement de droits d'auteur opérationnelle si lesdites informations de spécification de protection de droits d'auteur sont jointes audit élément de contenu particulier pour traiter un paiement de droits d'auteur lors du transfert dudit élément de contenu particulier.

7. Appareil de service de relais (6) comportant une zone de stockage (22) et relayant un service de réseau de communication en combinaison avec une pluralité d'appareils terminaux (11) abonnés à un contenu dudit service de réseau de communication avec des informations d'identification de terminal uniques affectées aux appareils terminaux respectifs et un appareil de service de fourniture de contenu permettant d'accepter une demande de transfert par un utilisateur pour un élément de contenu particulier choisi dans une pluralité d'éléments de contenu, des informations de spécification de protection de droits d'auteur étant jointes à chacun d'entre eux si ledit élément de contenu requiert une protection de droits d'auteur, ledit appareil de service de relais (6) comprenant :
une section de maintien de contenu (22) affectée à chaque appareil terminal (11) et opérationnelle lorsque ledit élément de contenu particulier est transféré depuis ledit appareil de service de fourniture de contenu (2) pour recevoir et retenir ledit élément de contenu particulier dans ladite zone de stockage (22) ;
une section d'acceptation de demande de livraison qui est prévue pour accepter une demande de livraison pour ledit élément de contenu particulier par ledit utilisateur par l'intermédiaire dudit appareil terminal (11) ; et
une section de livraison de contenu qui est prévue pour récupérer ledit élément de contenu particulier dont la livraison est demandée à partir de ladite zone de stockage (22) affectée dudit appareil de service de relais (6) et pour livrer ledit élément de contenu particulier récupéré audit appareil terminal (11) dudit utilisateur par l'intermédiaire dudit service de réseau de communication.

8. Programme de service de fourniture de contenu exécutable par un ordinateur d'un appareil de service de fourniture de contenu (2) pour assurer un service de réseau de communication en combinaison avec une pluralité d'appareils terminaux (11) abonnés à un contenu dudit service de réseau de communication avec des informations d'identification de terminal uniques affectées auxdits appareils terminaux (11) respectifs et un appareil de service de relais (6) permettant de récupérer un élément de contenu particulier dans une zone de stockage (22) et de transmettre ledit élément de contenu particulier à l'un de ladite pluralité d'appareils terminaux (11), ledit programme de service de fourniture de contenu comprenant les étapes consistant à :
accepter une demande de transfert (S103) dudit utilisateur pour ledit élément de contenu particulier choisi dans ladite pluralité d'éléments de contenu stockée dans une section de stockage (21, 42), à chaque élément de contenu étant jointes des informations de spécification de protection de droits d'auteur si ledit élément de contenu requiert une protection de droits d'auteur,
transférer (S106) ledit élément de contenu particulier pour lequel ladite demande de transfert a été acceptée à une section de retenue de contenu (22) affectée à chaque appareil terminal (11) dans une zone de stockage (22) dudit appareil de service de relais (6) de façon à retenir temporairement ledit élément de contenu particulier à l'intérieur avant livraison dudit élément de contenu particulier audit appareil terminal (11) dudit utilisateur ; et
traiter (S105), si lesdites informations de spécification de protection de droits d'auteur sont jointes audit élément particulier, le paiement des droits d'auteur lors du transfert dudit élément de contenu particulier.

9. Programme de livraison de contenu exécutable par un ordinateur d'un appareil de service de relais (6) qui est utilisé en combinaison avec une pluralité d'appareils terminaux (11) abonnés à un contenu d'un service de réseau de communication avec des informations d'identification de terminal uniques affectées auxdits appareils terminaux (11) respectifs et un appareil de service de fourniture de contenu (2) permettant de fournir ledit service de réseau de communication et d'accepter une demande de transfert d'un élément de contenu particulier par un utilisateur choisi dans une pluralité d'éléments de contenu dont chacun est stocké conjointement avec des informations de spécification de protection de droits d'auteur si ledit élément de contenu requiert une protection des droits d'auteur, ledit programme de livraison de contenu comprenant les étapes consistant à :
retenir (S113) ledit élément de contenu particulier dans une zone de stockage (22) affectée à l'appareil terminal (11) dudit utilisateur lorsque ledit élément de contenu particulier est transféré depuis ledit appareil de service de fourniture de contenu (2) ;
accepter une demande de livraison (S135) pour ledit élément de contenu particulier par ledit utilisateur par l'intermédiaire dudit appareil terminal (11) ; et
récupérer (S136) ledit élément de contenu particulier dont la livraison est demandée dans ladite zone de stockage (22) affectée dudit appareil de service de relais (6) et livrer (S136) ledit élément de contenu particulier récupéré audit appareil terminal (11) dudit utilisateur par l'intermédiaire dudit service de réseau de communication.

10. Procédé permettant de réaliser un service de réseau de communication dans un appareil de service de fourniture de contenu (2) en combinaison avec une pluralité d'appareils terminaux (11) abonnés à un contenu dudit service de réseau de communication avec des informations d'identification de terminal uniques affectées auxdits appareils terminaux (11) respectifs et un appareil de service de relais (6) pour mettre en mémoire tampon un élément de contenu particulier dans une zone de stockage (22) et transmettre ledit élément de contenu particulier à l'un de ladite pluralité d'appareils terminaux (11), ledit procédé comprenant les étapes consistant à :
accepter une demande de transfert (S103) par un utilisateur pour ledit élément de contenu particulier choisi dans ladite pluralité d'éléments de contenu stockée dans une section de stockage (21, 42), à chaque élément de contenu étant jointes des informations de spécification de protection de droits d'auteur si ledit élément de contenu requiert une protection de droits d'auteur,
transférer (S106) ledit élément de contenu particulier pour lequel ladite demande de transfert a été acceptée à une section de retenue de contenu (22) affectée à chaque appareil terminal (11) dans ladite zone de stockage (22) dudit appareil de service de relais (6) de façon à retenir temporairement ledit élément de contenu particulier à l'intérieur avant livraison dudit élément de contenu particulier audit appareil terminal (11) dudit utilisateur ; et
traiter (S105), si lesdites informations de spécification de protection de droits d'auteur sont jointes audit élément particulier, le paiement des droits d'auteur lors du transfert dudit élément de contenu particulier.

11. Procédé effectué dans un appareil de service de relais (6) qui est utilisé en combinaison avec une pluralité d'appareils terminaux (11) abonnés à un contenu d'un service de réseau de communication avec des informations d'identification de terminal uniques affectées auxdits appareils terminaux (11) respectifs et un appareil de service de fourniture de contenu (2) permettant de fournir ledit service de réseau de communication et d'accepter une demande de transfert d'un élément de contenu particulier par un utilisateur choisi dans une pluralité d'éléments de contenu dont chacun est stocké conjointement avec des informations de spécification de protection de droits d'auteur si ledit élément de contenu requiert une protection de droits d'auteur,: le procédé comprenant les étapes consistant à :
retenir (S113) ledit élément de contenu particulier dans une zone de stockage (22) affectée à l'appareil terminal (11) dudit utilisateur lorsque ledit élément de contenu particulier est transféré depuis ledit appareil de service de fourniture de contenu (2) ;
accepter une demande de livraison (S135) pour ledit élément de contenu particulier par ledit utilisateur par l'intermédiaire dudit appareil terminal (11) ; et
récupérer (S136) ledit élément de contenu particulier dont la livraison est demandée dans ladite zone de stockage (22) affectée dudit appareil de service de relais et livrer (S136) ledit élément de contenu particulier récupéré audit appareil terminal (11) dudit utilisateur par l'intermédiaire dudit service de réseau de communication.
